(19) Europäisches Patentamt / European Patent Office / Office européen des brevets

(11) **EP 2 402 691 A2**

(12) **EUROPEAN PATENT APPLICATION**
published in accordance with Art. 153(4) EPC

(43) Date of publication:
**04.01.2012 Bulletin 2012/01**

(21) Application number: **10746505.6**

(22) Date of filing: **26.02.2010**

(51) Int Cl.:
*F26B 5/04* *(2006.01)*    *F26B 9/06* *(2006.01)*

(86) International application number:
**PCT/RU2010/000091**

(87) International publication number:
**WO 2010/098698 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.02.2009 RU 2009106920**

(71) Applicant: **Zakpytoe Actsionernoe Obschestvo "Twin Trading Company" Moscow 119330 (RU)**

(72) Inventors:
- **ABRAMOV, Yakov Kuzmich Moscow 109202 (RU)**
- **VESELOV, Vladimir Mihailovich Moscow 123181 (RU)**
- **ZALEVSKY, Viktor Mihailovich Moscow 125080 (RU)**

- **EVDOKIMOV, Vladimir Dmitrievich Moscow 127083 (RU)**
- **TAMURKA, Vitaly Grigorevich Moscow 109386 (RU)**
- **VOLODIN, Veniamin Sergeevich Moskovskaya obl. 142700 (RU)**
- **MARCHENKO, Vladimir Ivanovich Moskovskaya obl. 140091 (RU)**
- **TALEEVA, Elena Vladimirovna Moskovskaya obl. 142104 (RU)**
- **KONDRASHKINA, Nina Semenovna Moscow 111672 (RU)**

(74) Representative: **Klemm, Rolf Dennemeyer & Associates S.A. Bavariastraße 7 80336 München (DE)**

(54) **METHOD FOR DRYING WOOD AND AN APPARATUS FOR THE IMPLEMENTATION THEREOF**

(57)    The invention relates to the sector of wood conversion, in particular, to the method of timber drying and the unit using in practice thermo-vacuum-impulsive treatment.

The method of timber drying by means of repeated alternation cycles including the blowing of timber with heating medium operation at atmospheric pressure and heating the timber to average volume temperature 80 - 100 ˚C, impulsive (quick) vacuum treatment operation at pressure not more than 50 mm Hg during time not more than 10 s with pressing-out of free moisture from timber without water to vapour transition to reach stable constant value of timber temperature, vacuum relief to atmospheric pressure by means of heating medium supplying, at that timber blowing and vacuum relief are performed by using heat recuperating air with temperature 150-300 ˚C, and at manometer pressure not more than 0,07 MPa.

The apparatus to work in practice the method for timber drying comprises two drying chambers connected through pipelines with quick-response valves to cooled receiver, which is placed in series to the second one and connected to vacuum pump through pipeline with vacuum lock. The first receiver is equipped with spiral-shaped guide devices for vapour-and-drop flow direction, which are installed at a tangent to inner diameter of receiver body. The drying chambers are connected to the system for preparation of hot heating medium supply.

The method and the unit stimulate the drying process at simultaneous improvement of dried timber quality.

Fig. 1

## Description

The invention relates to wood processing sector, in particular, to timber vacuum drying technology and can be used in timber, timber processing, and other industries.

The currently used method of impulsive-vacuum drying of construction materials by means of repeated alternation of heating cycles with simultaneous blowing of materials with heating medium and vacuum treatment, and during each cycle the adiabatic exposure is done between heating and vacuum treatment operations of duration time equal to the blowing time. The blowing operation is performed with a gas-air mixture at the temperature of 160 ˚C and moisture content 15 g per kg during 6 minutes. The vvacuum treatment is done during two minutes at the residual pressure of 300 mm Hg (See a.c. USSR N⎕ 1000701, class. F 26 B 5/04, published in 1981 r.). The unit comprises a drying chamber and a vacuum pump, which are connected to a receiver through pipelines and valves.

The shortcomings of the method and the unit include:
significant power consumption due to the requirement to produce vacuum for a long time and a long time is required for a drying operation, poor quality of timber drying in the cross-section area and a considerable unevenness of final water content along the length of a pile.

There is a better method of timber drying - in a drying chamber by means of repeated alternation of blowing with heating medium operation cycles with evolved vapour evacuation and vacuum treatment operations, in which timber is previously heated to the average volume temperature 80 - 100 ˚C Following this the timber drying is done by means of repeated alternations of vacuum treatment and blowing operations with heating medium cycles until moisture content reaches 30%. After the vacuum treatment cycle an exposure in a sealed drying chamber is done until the pressure becomes equal to the atmospheric pressure, and a vacuum treatment is performed at the residual pressure of 10-50 mm Hg during 30-120 min, and pressure relief is performed during 1-30 sec., the condensate is removed when a vacuum treatment operation is performed, and a blowing operation is performed with heating medium at temperature 80 - 150 ˚C during the time equal to a vacuum treatment operation time The timber drying operation is repeated until 30% of moisture content is reached and the total vacuum treatment operation time passed, which is determined by a mathematic formula that includes density of material, moisture content, surface area, thickness and width of dried timber etc. Upon reaching 30% moisture content after vacuum treatment operation, the blowing operation is performed without vacuum exposure at the temperature of 80 - 150 ˚C, and the timber drying until the final moisture content is reached is determined by either mathematic formula or in practical way. (See Patent RF N⎕ 2056602 class. F 26 B 5/04).

The unit used for this method comprises a heating drying vacuum chamber connected through a quick-response valve and a vacuum piping system to a receiver and a vacuum pump. The ratio of the drying chamber space to the receiver space must be at least 1:10 to obtain the required vacuum depth.

The shortcomings of the method and the unit include several problems of the operation. Significant capital expenditures are required to manufacture receiver with the space ten times exceeding the drying chamber space, the unsealing of all system is required when the condensate from timber is removed and this results in power consumption increase, ineffective use of different parts of the unit and poor efficiency when timber-drying operation is resumed.

The closest analogue of the claimed method is timber drying performed by means of repeated alternation of blowing with heating medium operations cycles with evolved vapour removal, vacuum treatment, previous heating to average volume temperature 80 - 100 ˚C reaching, repeated alternation of vacuum treatment and blowing with heating medium cycles, at that each vacuum treatment cycle is performed at constant timber heating in a sealed drying chamber by quick vacuum treatment method by means of receiver, quick-response valves and pipelines with the constant heating of timber in a drying chamber isolated from the atmosphere, and exposure process in the chamber is done under pressure reaching equal to the vapour-pressure equilibrium at the given temperature. Prior to each cycle of vacuum treatment, a quick vacuum treatment operation is performed in receiver at pressure of 1-10 mm Hg, quick-response valves providing connection of drying chamber to receiver during 0.1-0.5 s and the pressure relief in the drying chamber during 0.5-5.0 s, and using pipeline connecting the drying chamber to the receiver. The receiver space design is performed in such a manner that when connected to the drying chamber, the pressure in the latter should be less than vapour-pressure equilibrium at the given temperature. (See Patent RF N⎕ 2228498 Class F 26 B 5/4).

The closest analogue of the unit using this method in practice is a timber drying unit (See Patent RF N⎕ 2213309, F 26 B, 9/06, 5/04). The apparatus comprises two drying chambers connected through pipelines with quick-response valves to receiver and a vacuum pump. The space of the receiver is equal to the space of one of the drying chambers after it is filled with timber. It is equipped with an air-lock chamber and connected to the latter through pipelines and a valve. The pipelines connecting drying chambers to receiver are installed tangentially to the receiver. The diameter of the pipeline connecting each drying chamber to the receiver is calculated according to the formula:

$$d = \frac{(P+P_0) \times \acute{\eta} \times l \times V_0 \times 163}{\sqrt[4]{P \times P_0 \times t}}$$

where: d - pipeline diameter, m;

P - pressure in drying chamber, Pa;

$P_0$ - pressure in receiver, Pa;

$\acute{\eta}$ - kinematic viscosity, cS;

l - pipeline length, m;

Vo - free space of drying chamber, m $^3$;

t - time of attaining the designed pressure in a drying chamber, s.

This method and the unit have some operation shortcomings.

The shortcomings of this method include performing vacuum timber heating, which results in moisture evacuation during actually equilibrium process of low intensity moisture evaporation as well as lower speed of drying process and poor quality of dried timber. Besides, the initial timber heating up to 80 - 100 ˚C with the air of relatively low humidity can result in external and internal cracks.

The unit's disadvantage is a poor performance. When two drying chambers are operated simultaneously, it is necessary to perform alternate vacuum treatment to evacuate high-temperature vapour-and-drop medium into the receiver, and this results in temperature increase in the receiver, in vacuum pump chamber and in lower vacuum build-up rate as well as decrease of vacuum level in the receiver. Accordingly, the efficiency of quick vacuum treatment decreases because of lowering of pressure gradient in the drying chamber and the receiver which increases the duration of timber drying process and increases power consumption. Absence of equipment for vapour-and-drop mixture condensation and heat flow cooling in vacuum line and in heat recuperating air line reduces the unit's productivity and quality of dried timber.

To determine the pipeline diameter in the mentioned formula, the time of preset pressure in the drying chamber is included in the closest analogue, and the time depends upon relation of the receiver's space to the drying chamber's free space following the filling and change of temperature in the drying chamber at adiabatic gas expansion. Free space in the drying chamber is not constant because the volume of a pile varies with the timber size. The above-mentioned formula to determine pipeline diameter appears to be incorrect.

The task of the invention is the development of a method for timber drying and the unit to do this in practice, which allows using high temperature drying schedule to stimulate the drying process at simultaneous improvement of dried timber quality and power consumption decrease.

The task is achieved by means of such a technique, that in method of timber drying by means of repeated alternation cycles including the blowing of timber with heating medium operation and heating the timber to average volume temperature 80 - 100 ˚C, impulsive (quick) vacuum treatment using a receiver, quick-response valves and pipelines followed by vacuum exposure, blowing of timber is performed at the atmospheric pressure, impulsive vacuum treatment is performed during not more than 10 seconds with pressing-out of free moisture from timber without water to vapour transition including vacuum exposure to reaching stable constant value of timber temperature followed by vacuum relief to the atmospheric pressure by means of heating medium, at that timber blowing and vacuum relief are performed by using heat recuperating air with temperature 150 -300 ˚C, and in the beginning and in the end of drying operations one or more drying cycles are performed using steam with the temperature of 100 -115 ˚C and manometer pressure not more than 0,07 MPa as a heating medium. Vacuum treatment is performed at operating pressure not more than 50 mm Hg.

For softwood timber on completing drying operation, the removal of colophony condensed on the inner wall of a cooled receiver followed by means of melting it down with steam of temperature to 115 ˚C and manometer pressure not more than 0.07 MPa to a jacket of the receiver.

To carry out this method, a timber drying unit is proposed. It consists of two drying chambers connected through pipelines with quick-response valves to receiver, which is equipped with air-lock chamber and connected with the latter through pipeline with valve as well as vacuum pump. Additionally the unit is equipped with the second receiver, placed in series to the first one and connected to a vacuum pump through a pipeline with a vacuum lock.; The first receiver is equipped with a jacket and near its outlet the spiral-shaped guide devices for vapour-and- drop flow direction are installed at a tangent to inner diameter of the receiver's body and drying chambers are connected through air ducts to the system for preparation of hot heating medium supply.

The relation of the sum of free spaces of receivers to free spaces of drying chambers as well as the time of reaching the preset pressure in drying chamber are calculated according to the following formulas:

$$V_p / V_{\text{к.с.}} = (P_{\text{к.с.о.}} - P_{\text{н.п.}}) / (P_{\text{н.п.}} - P_{\text{pо}});$$

$$t = [(P_{\text{н.п.}} / P_{\text{к.с.о}})^{(\text{к-1}/(2-\text{к})}} - 1] / B;$$

where: $V_p$ - free space of receiver;

$V_{\text{к.с.}}$ - free space of drying chamber;

$P_{\text{к.с.о.}}$ - initial pressure in drying chamber; $P_{\text{н.п.}}$ - saturation pressure of moisture vapour depending upon temperature in drying chamber;

$P_{\text{pо}}$ - initial pressure in receiver;

t - time of preset pressure reaching in drying chamber,

к - gas polytropic index in drying chamber;

$$B = (\text{к-1})/2 \times (Go/\omega_o) - \text{index of effluence rate;}$$

$$Go = \sqrt{(\text{к} \times g)/(R \times T_{\text{к.с.о}})} \times (2/(\text{к}+1))^{(\text{к}+1)/(\text{к-1})} \times F_{\text{кр}} \times P_{\text{к.с.о}} - \text{initial gas flow rate;}$$

g - Free Fall Acceleration;

$F_{\text{кр}}$ - throat area of pipeline connecting a drying chamber to a receiver;

R - gas constant of gas in a drying chamber;

$T_{\text{к.с.о}}$ - initial temperature of gas in a drying chamber prior to switching-on the valve;

ωo - initial mass of gas in a drying chamber prior to switching-on the valve;

In the unit, hot heating medium supply system design allows controlling time, flow rate, and temperature.

To provide timber with some properties such as fire resistance and bio stability the unit is equipped with material treating preparation unit connected through injection valve to a pipeline with nozzles for even distribution of treating material over pile.

The offered method of drying increases heating rate for timber due to heating at atmospheric pressure in comparison with heating timber at vacuum, as well as due to the supply of the dried heat recuperating air at the temperature of 150 - 300 ˚C. In this case maximum values of heating timber temperatures are reached. During the following impulse vacuum treatment operation the boiling of moisture occurs in the timber due to its overheating and thus more intensive moisture transfer from timber into drying chamber and vacuum line occurs.

Due to vapour-and- drop medium cooling and condensation in a cooled vacuum receiver during vacuum impulse the large value of pressure gradient occurs as compared with the closest analogue and under the influence of vacuum impulse the most part of moisture in timber capillary is extracted with no evaporation but as the smallest drop (mist) that allows intensifying moisture extraction from timber process at simultaneous power consumption decrease and producing high quality and uniformed in moisture content dried timber with no damages occurring when drying at conventional drying units.

The total set of essential features results in increase of relation of total space of vacuum receivers to drying chamber free space following filling it with a pile of wood. This increase vacuum build-up rate and depth in drying chambers, in consequence of which the processes of moisture pressing-out and timber drying are intensified, drying time and power consumption decrease, and the unit's efficiency is increased.

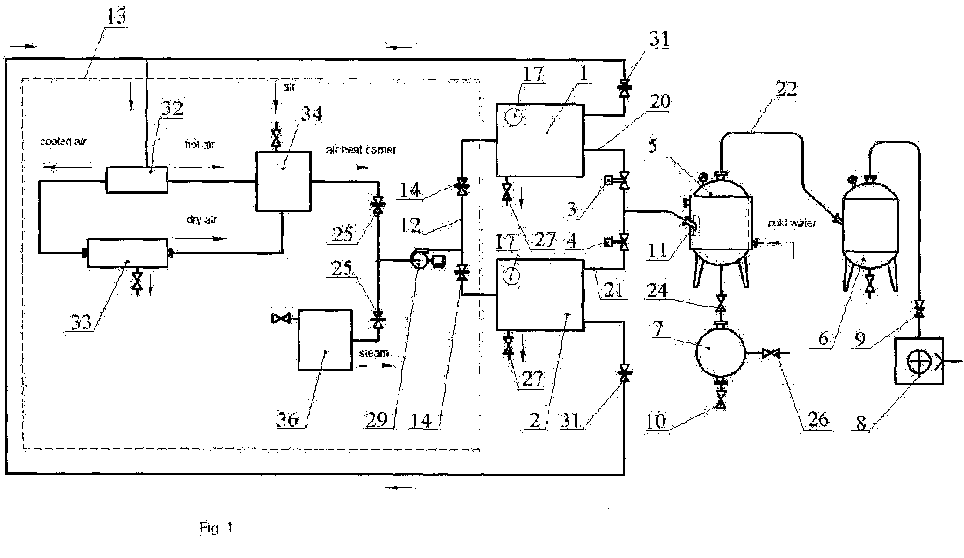

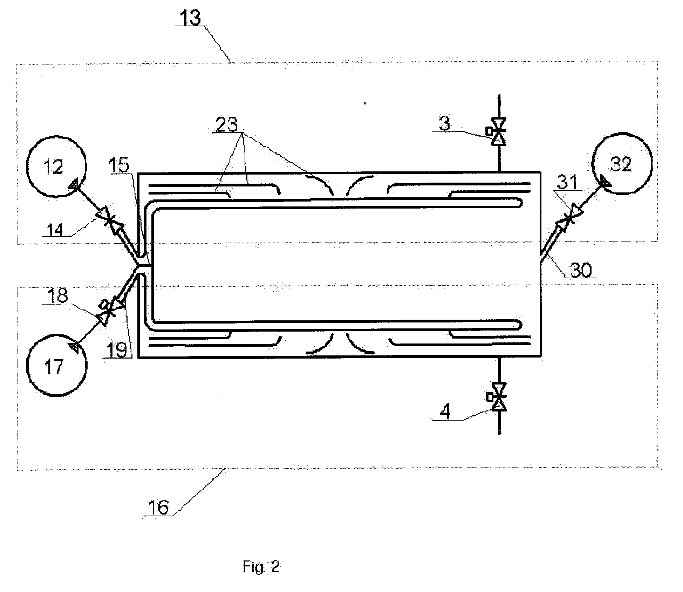

The invention is illustrated with figures, which show the unit's block scheme to perform drying method (Figure 1) and arrangement scheme of elements of the drying chamber (Figure 2).

The unit's block scheme and arrangement scheme of elements of the drying chamber include drying chambers 1, 2 connected through pipelines 20, 21 and quick-response valves 3, 4 to a cooled vacuum receiver 5. At the inlet of receiver 5, a spiral guide device 11 is installed. Receiver 5 connected in series to the second vacuum receiver 6 and vacuum pump 8 through pipeline 22 with a vacuum lock 9 and connected to the air-lock chamber 7 through a pipeline and a connecting valve 24. The air-lock chamber 7 is equipped with the draining tap 10 and the vent tap 26. Drying chambers 1, 2 are connected to heating medium supply line 12. Heating medium supply line is connected to system for heating medium preparation 13 which includes a steam generator or a boiler-room to supply steam at 100-115°C with the manometer pressure not more than 0,07 MPa, and gas generator 34 to prepare heat recuperating air to preset temperature (150-300 °C), two vacuum locks 25, a fan 29, and two vacuum locks 14 for the pile heating. Feeding with steam-and-air heating medium is performed from the end of a drying chamber at that the heating flow is directed to one or another side of the pile through guide devices 15 or shutter assembly 23. The heating flow is directed to cross-section of the pile and leaves the pile from back side through air ducts 30 and vacuum locks 31. Heat recuperating air is directed to the vortex tube 22 and the calorifier-type dryer 33, which is cooled with cold water to decrease relative humidity of air flow from a drying chamber. Drain taps 27 are designed for draining condensate from drying chambers to receiving tank.

The offered method of drying is performed in the following manner. Timber to be dried is packed in a pile on a movable trolleys and placed in drying chambers 1 or 2. The unit's operation is demonstrated by way of example of the first drying chamber because the second one functions in a similar manner. The doors of chamber 1 are closed, quick-response valve 3, and taps 10, 26, 27 are turned off. Functioning of vacuum pump 8 provides operating pressure not more than 50 mm Hg in cooled receiver 5, receiver 6 and air-lock chamber 7; vacuum lock 9 and valve 24 are turned on.

When preset pressure is reached in receivers 5, 6 and air-lock chamber 7, vacuum lock 9 is turned off and vacuum pump shut off. At the phase of timber heating the water steam at temperature 100 -115 °C and manometer pressure not more than 0.07 MPa is supplied through steam-air heating medium line 12 with fan 29, through vacuum locks 25, 14, flow guide devices 15 or shutter assembly 23 from boiler room or steam generator 36. The water steam enters one or another side of the pile over its cross-section and leaves the pile from backside through air ducts 30 and vacuum locks 31.

When preset temperature 80-100°C is reached in the pile, depending upon the timber size the feeding of water steam is shut off by means of vacuum locks 14, 31 being turned off, quick-response valve 3 turned on during 1 s, which connects drying chamber 1 to cooled receiver 5, vacuum-impulsive impact of timber occurs including moisture pressing-out and drying, pressure becomes equal in receivers 5, 6, air-lock chamber 7, and drying chamber 1; and the temperature decreases in drying chamber. In chamber 1 vacuum exposure is performed when temperature decreasing to stable temperature of timber will be reached. Then quick-response valve 3 turned off, vacuum locks 31, 14 turned on to relief vacuum by means of heat recuperating air to reach atmospheric pressure in drying chamber 1, vacuum locks 31, 14 are turned off, draining tap 27 turned on to drain condensate from drying chamber 1. Simultaneously the condensate is removed from air-lock chamber: valve 24 turned off, valve 26 turned on to make pressure in air-lock chamber equal to atmospheric one and valve 10 turned on to remove condensate from air-lock chamber. No unsealing of receiver 5, 6 occurs which allows saving time when operation pressure reaching for the following impulsive vacuum treatment operation performing, power consumption becomes lower. From the drying chamber and air-lock chamber condensate is directed to the condensate tank. After condensate removing from drying chamber 1 and air-lock chamber 7 taps 10, 26, 27 are turned off, quick-response vacuum valve 3 is turned off, vacuum lock 9 and valve 24 are turned on, vacuum pump 8 switched on, and vacuum is created in receivers 5, 6 and air-lock chamber 7 to reach operating pressure no more than 50 mm Hg. Simultaneously with vacuum reaching in receivers 5, 6 steam is supplied into drying chamber 1 through lock 14 with heating media removing through lock 31 to heat the timber to reach temperature 80-100°C, and vacuum-impulsive treatment with moisture pressing-out and timber drying is performed. Cycles of the pile heating with water steam followed by impulsive vacuum treatment and vacuum exposure accompanied by temperature decrease to stable temperature of timber reaching repeat one or more times depending upon timber size in the pile.

Change of air heating media of heat capacity $C_p$ = 1.0 kJ/(kg × degrees C) for more effective heating media as water steam $C_p$ = 2.09 kJ/(kg × degrees C) allows accelerating timber heating and decrease timber drying time. At such difference in temperature between water steam and timber the water steam condensation occurs on the timber surface accompanied by release of latent heat of vaporization r = 2262.6 kJ/kg and this chances the pattern of timber heating fundamentally. Along with timber drying acceleration process due to water steam condensation on the surface of timber the diffusion of water into timber occurs thus humidifying the upper layers of timber and surface stress relief in timber occurs, and at other types of drying the surface stress results in timber cracking in an initial phase of moisture evacuation.

A low level of residual pressure in drying chambers and high rate of reaching this pressure provide conditions for moisture being in capillary and inter-capillary space moving to the surface without water transition into vapour under the influence of pressure differential (pressure in chamber is lower than pressure in capillary). Gases dissolved in water promote this process by means of its extension. Being more mobile than water gases are the first, which start movement and create by that a regular stream flow in capillary.

At the stage of the pile heating and due to vacuum-impulsive treatment, the free moisture in amounts of 40-60 % is pressed out with water transition into vapour depending upon the type of timber, at that moisture evacuation process is intensified and power consumption decreases.

Upon reaching average volume temperature 80 - 100 °C in the pile the heating of timber with steam stops and the heating with hot air of preset temperature 150-300 °C continues depending on type and size of timber.

In gas generator 34 hot gases with temperature 1000-1200˚C are mixed with atmospheric air and with dried hot air after vortex tube 32 and with dried cold air after calorifier 33. Prepared heating media of temperature 150-300˚C from gas generator depending upon type and size timber in the pile through steam-air heating media line 12 is supplied to drying chamber 1 by means of fan 29 through vacuum locks 25, flow guide devices 14 or shutter assembly 23 for uniform the pile heating and directed to one or another side of the pile over its cross-section and leaves the pile from back side through air ducts 30 and vacuum locks 31 into vortex tube 32 and calorifier-type dryer 33 cooled with cold water to lower relative humidity and recirculation of exhausted heating medium in gas generator. In the vortex tube, air flow is divided into cooled air, which enters calorifier-type dryer and hot air enters gas generator and used as component of heat recuperating air. From calorifier-type dryer 33 dried air flow enters gas generator 34 to prepare heating media of preset temperature. From dryer 33 condensed moisture enters condensate tank.

Upon reaching preset temperature in drying chamber 1 the supplying with hot heating medium stops by means of vacuum locks 14, 37, tap 27 turned off, and quick-response valve 3 connecting chamber 1 to cooled receiver is turned on. Thermo-vacuum-impulsive treatment on timber occurs accompanied by moisture pressing out and drying and pressure equalization occurs in receivers 5, 6, air-lock chamber 7, and in drying chamber 1 at simultaneous lowering of temperature in drying chamber. In drying chamber, vacuum exposure of timber is performed upon temperature drop in timber to constant level. Then quick-response valve 3 turned off, vacuum locks 14, 31 turned on to relief vacuum by means of heat recuperating air to reach atmospheric pressure in drying chamber 1, vacuum locks 14, 31 turned off, draining tap 27 turned on to drain condensate from drying chamber 1. Simultaneously the condensate is removed from air-lock chamber: valve 24 turned off, valve 26 turned on for pressure equalizing in air-lock chamber to atmospheric pressure following valve 10 turn on to remove condensate from air-lock chamber. From the drying chamber and air-lock chamber condensate enters condensate tank. After condensate removing from drying chamber 1 and air-lock chamber 7 taps 10, 26, 27 turned off, quick-response vacuum valve 3 is turned off, vacuum lock 24 and valve 9 turned on, vacuum pump 8 switched on, and vacuum is created in receivers 5, 6 and air-lock chamber 7 to reach operating pressure no more than 50 mm Hg. In drying chamber 1 simultaneously with vacuum reaching in vacuum line the timber heating with heat recuperating air occurs upon reaching preset temperature, and vacuum-impulsive treatment on timber occurs accompanied by moisture pressing out and drying. While removing of moisture from timber the airflow temperature increases in outlet of drying chamber and vacuum depth grow is observed in drying chamber. In the drying chamber, heating of the pile with dried hot heat recuperating air followed by vacuum-impulsive treatment is repeated upon reaching required moisture content in timber. Timber drying operation end is detected according to temperature difference of heat recuperating air at inlet and outlet of drying chamber as well as according to temperature of vapour of moisture in vacuum line.

At the end of drying of timber operation its conditioning, humidifying of upper layers and temperature decrease are performed. The conditioning operation is performed by the method of "steaming" with vacuum-impulsive cycles. Vacuum relief is performed by means of steam injection into space of drying chamber 1 followed by time adjustment, at that the diffusion of water into upper layers of timber and stress decrease in timber occur. The amount of steam and time adjustment depends upon type and size of timber. The stage of conditioning is completed by means of valves 3, 4 turning on and excessive pressure releasing into cooled receiver 5.

At the end of operation when nonuniform timber drying occurs, the stress develops in timber, promoting cracks formation on the surface and inner areas of material to be dried and this result in timber twisting. During 2-3 final moisture evacuation cycles when steam enters pile, the increase of humidity content occurs in upper layers of timber along with stress decrease to prevent cracks formation and twisting of timber to be dried. Experimental work shows that after two cycles of timber steaming at the end of drying operation the stress in timber decreases from 7- 8 to 1,5 - 2,0 %.

Cooled receiver 5 functions as condenser for evaporants from timber because of moisture and colophony vapours (when softwood drying) cooled and condensed on the condenser inner surface, which is cooled with cold water. The spiral-shaped guide devices 11 for vapour-and- drop flow, which are installed at a tangent to inner diameter of cooled receiver body 5 provide active vapour condensation and condensate removal into air-lock chamber decreasing by that the average temperature of evacuated media. The cooled receiver 5 functions continuously as drop catcher and colophony receiving tank when softwood drying.

Alternative connecting of receivers 5, 6 to vacuum pump 6 through the top of the receiver 6 decreases considerably the probability of entering vapour-and-drop medium vacuum pump 8, decreasing by that time for operating pressure reaching in receivers, thus apparatus productivity increases and power consumption decreases.

The functioning of drying chambers 1, 2 is synchronized in such a manner, when timber heating cycle is performed in chamber 1, the thermo-vacuum-impulsive treatment cycle including timber pressing out and drying is performed in chamber 2 and vice versa. Upon drying operation completing, the condensate is drained through tap 27 into receiving tank.

Following the softwood drying operation the process of condensed colophony removing from inner surface of cooled receiver is performed by means of steam 100-115 ˚C entering the receiver jacket, heating of colophony to reach liquid state and colophony draining through valve 24 and tap 10 into container.

A unit for preparation of fire-retardant agents, wood preservatives, and varnish-and-paint compositions is designed to provide the wood with additional properties such as fire-resistance by means of impregnation of wood with fire-retardant agents, bioproofness - impregnation with wood preservatives, and to obtain various colours and shades for wood by means of varnish-and-paint compositions application. Following the timber drying operation and upon reaching required moisture content the impregnation of timber is performed by means of impregnating material flow supplying when vacuum relieving to reach atmospheric pressure.

A specimen of claimed apparatus has been manufactured, passed the stage of experimental-industrial testing and demonstrated high quality of various types of dried timber, drying time decrease, operational reliability and ease of operation, and cost reduction of dried timber.

The unit presents a closed, environmental- and fire-safe system, and complies with the international standards. The unit is characterized by high efficiency when drying various types of wood, allows drying it to required moisture content while keeping high quality of timber and provide such special qualities as fire-resistance, bioproofness and obtain wood of various colours and shades, and catch colophony when softwood drying. The apparatus is easy to operate, economically effective, and timber drying process is automated.

**Claims**

1. The method of timber drying by means of repeated alternation cycles including the blowing of timber with heating medium operation and heating the timber to average volume temperature 80 - 100 ˚C, impulsive (quick) vacuum treatment operation using receiver, quick-response valves and pipelines followed by vacuum exposure, wherein blowing of timber is performed at the atmospheric pressure, and impulsive vacuum treatment is performed during not more than 10 s with pressing-out of free moisture from timber with no phase of water to vapour transition including vacuum exposure to reach stable constant value of timber temperature followed by vacuum relief to atmospheric pressure by means of heating medium, at that timber blowing and vacuum relief are performed by using heat recuperating air with temperature 150 300 ˚C, and in the beginning and in the end of drying operations one or more drying cycles are performed using steam with temperature 100 115 ˚C and manometer pressure is not more than 0,07 MPa as heating medium.

2. Method of the patent claim 1, wherein for softwood timber upon completing drying operation, the removing of colophony condensed on inner wall of cooled receiver followed by its draining to container is performed by means of its melting down with steam of temperature to 115 ˚C and manometer pressure not more than 0.07 MPa in a jacket of receiver.

3. The unit for timber drying comprising two drying chambers connected through pipelines with quick-response valves to receiver, which is equipped with air-lock chamber and connected with the latter through pipeline with valve as well as vacuum pump wherein the apparatus is additionally equipped with the second receiver, placed in series to the first one and connected to vacuum pump through pipeline with vacuum lock; the first receiver is equipped with jacket and near its outlet the spiral-shaped guide devices for vapour-and- drop flow direction are installed at a tangent to inner diameter of receiver body and drying chambers are connected through air ducts to the system for preparation of hot heating medium supply.

4. The unit of patent claim 3, wherein relation of the sum of free spaces of receivers to free spaces of drying chambers as well as the time of preset pressure reaching in drying chamber are calculated according to the following formulas:

$$V_p / V_{к.с.} = (P_{к.с.о.} - P_{н.п.}) / (P_{н.п.} - P_{po});$$

$$t = [(P_{н.п.} / P_{к.с.о})^{(к-1)/(2-к)} - 1] / B;$$

where: $V_p$ - free space of receiver;

$V_{к.с.}$ - free space of drying chamber;

$P_{к.с.о.}$- initial pressure in drying chamber;

$P_{н.п.}$ - saturation pressure of moisture vapour depending upon temperature in drying chamber;

$P_{po}$ - initial pressure in receiver;

t - time of preset pressure reaching in drying chamber,
$\kappa$ - gas polytropic index in drying chamber;

$$B = (\kappa-1)/2 \times (Go/\omega_o) - \text{index of effluence rate;}$$

$$Go = \sqrt{(\kappa \times g)/(R \times T_{\text{к.с.о}}) \times (2/(\kappa+1))^{(\kappa+1)/(\kappa-1)}} \times F_{\text{кр}} \times P_{\text{к.с.о}} - \text{initial gas flow rate;}$$

g - Free Fall Acceleration;
$F_{\text{кр}}$ - throat area of pipeline connecting drying chamber to receiver;
R - gas constant of gas in drying chamber;
$T_{\text{к.с.о}}$ - initial temperature of gas in drying chamber prior valve switching-on operation;
$\omega_o$ - initial mass of gas in drying chamber prior valve switching-on operation.

5. The unit of patent claim 3 wherein hot heating medium supply system design allows controlling time, flow rate, and temperature.

6. The unit of patent claim 1 wherein it is equipped with treating material preparation unit connected through injection valve to pipeline with nozzles for uniform distribution of treating material over pile.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1000701

- WO 2056602 A